# EUROPEAN PATENT SPECIFICATION

(11) **EP 4 141 226 B1**
(45) Date of publication and mention of the grant of the patent: **29.01.2025**
(21) Application number: 21398014.7
(22) Date of filing: 27.08.2021
(51) Int. Cl.: F01N 3/05, F01N 5/04, F01N 13/00, F01N 13/08, B62D 35/02, B62D 37/02

(54) **IMPROVED VEHICLE PROVIDING EXHAUST GAS ENERGY RECOVERY**
VERBESSERTES FAHRZEUG MIT ABGASENERGIERÜCKGEWINNUNG
VÉHICULE AMÉLIORÉ AVEC RÉCUPÉRATION D'ÉNERGIE DES GAZ D'ÉCHAPPEMENT

(43) Date of publication of application: 01.03.2023
(73) Proprietor: António Cameira Eiras, Unipessoal Lda, 1250-247 Lisboa (PT)
(72) Inventor: Cameira da Silva Eiras, António Manuel, 1250-247 Lisboa (PT)
(74) Representative: Pereira da Cruz, Joao

(56) References cited:
- DE-A1- 102016 106 820
- DE-A1- 102020 103 196
- KR-A- 20070 018 259
- US-B2- 7 793 495

## Description

### SCOPE OF THE INVENTION

A diffuser is a duct with divergent walls, as is the case of the end part of a Venturi Tube, a technical device consisting of a convergent and divergent duct and intended to be passed through by a fluid. From Bernoulli's Equation in Fluid Mechanics, we know that the static pressure in a flowing fluid varies in inverse proportion to the square of its velocity. Also from Fluid Mechanics we know that a lift force is applied to the vertical of a body passing through a fluid in which it is immersed, and that this force results from the difference of the static pressures of the fluid in contact with the upper and lower surfaces of that body. In the case of a vehicle, the negative lift or downforce applied to it is generated by the acceleration of the air circulating under the vehicle between its lower surface and the ground. When applied to the rear of a vehicle, the diffuser is used to accelerate the extraction of the air flowing under the vehicle between the chassis floor and the ground, draining this air into a zone of reduced static pressure behind the vehicle.

The use of the diffuser aims to create an effect similar to that of a Venturi tube in the air that circulates between the vehicle floor and the ground. In this way, the speed of the air circulating under the entire chassis is increased and, as a result, the static pressure of the air therein flowing is reduced, thus increasing the negative downforce generated. The air flow, as well as any other fluid, can have a linear behaviour, in which its particles move parallel to each other, with the least friction between them and in their interaction with the surfaces they come into contact with, or assume a turbulent behaviour, in which the air particles move randomly, colliding with each other and the surfaces they interact with, causing a consequent increase in friction, vibrations and noise.

With the use of a diffuser at the rear of a vehicle, and as a consequence of the acceleration of the air flowing under the vehicle chassis, the air pressure circulating therein will be reduced and the flow will tend to adhere to its limiting walls. In the area immediately anterior to the rear wheels, where the air speed is the highest and the static pressure is the lowest, the flow remains adherent to the lower surface of the chassis. This is where the greatest downforce develops. On its passage through the diffuser, as the air pressure gradually increases, the pressure gradient is unfavourable and the air has an increased tendency to become turbulent and separate from the surface of the walls, which, if occurring, would lead to a loss of effectiveness of the diffuser.

The suction effect, caused by the use of the present invention, will delay the transition from laminar to turbulent flow and prevent the separation of the air flow from the walls of the diffuser, and will also allow the design of a diffuser with a greater divergence angle, therefore with greater capacity for the air to flow under the vehicle and, consequently, capacity to generate greater downforce.

### PRIOR ART OF THE INVENTION

The prior art of the invention can be characterized by the following patent documents: US2021033008 (A1), US2020353808 (A1), US2019323415 (A1), DE102020103196 (A1), DE102016106820 (A1) and KR20070018259 (A).

### SUMMARY OF THE INVENTION

The present invention relates to an improved vehicle providing exhaust gas recovery, so as to optimise the aerodynamic performance of the diffuser (2) and/or the floor (1) of a vehicle and may be applied to:
- family cars, or others, with engine in front or central front position, in which case the improved system of vehicles exhaust gas recovery may be applied to the entire floor (1) and possibly, if any, to the diffuser (2);
- sports cars:
   ∘ with engine in rear or central rear position, in which case the improved system of vehicles exhaust gas recovery may be applied, in a simpler way, only to the diffuser (2), or in a more complex way, to the diffuser and the rest of the floor (1) of the vehicle;
   ∘ with engine in central front position, in which case the improved system of vehicles exhaust gas recovery may be applied to the floor (1) and in a continuous manner to the diffuser (2);
- vehicles intended for competition, provided their use is permitted by the relevant technical regulations.

With the use of the improved vehicle providing exhaust gas recovery, object of the present invention, energy which is usually wasted is used, increasing the overall aerodynamic efficiency of the vehicle and its dynamic qualities, also contributing to reducing the environmental impact, thus achieving the following objectives:
- reduce friction and, consequently, energy consumption, noise and vibrations associated with turbulent flow, since laminar flow is maintained, delaying or even preventing its transition to turbulent;
- increase the effectiveness of the diffuser (2) in extracting the air circulating under the vehicle and, as a consequence, the downforce developed there, keeping the flow laminar and adherent and increasing the air drainage capacity.

The above mentioned effects are achieved with a vehicle providing exhaust gas recovery according to independent claims 1 and 2.

### DESCRIPTION OF THE FIGURES

### Indication of the reference numbers:

(1) Vehicle floor;
(2) Diffuser;
(3) Rear wheels;
(4) Exhaust pipes;
(5) Engine / internal combustion engine;
(6) End part of the exhaust pipes (4);
(7) A) Transverse slots in the floor (1) and B) Transverse slots in the diffuser (2);
(8) Exhaust outlet;
(9) Front wheels;
(10) Exhaust pipe connection (4) in common final exhaust;
(11) Gearbox;
(12) Diffuser (2) lateral wall;
(13) Diffuser (2) upper wall.

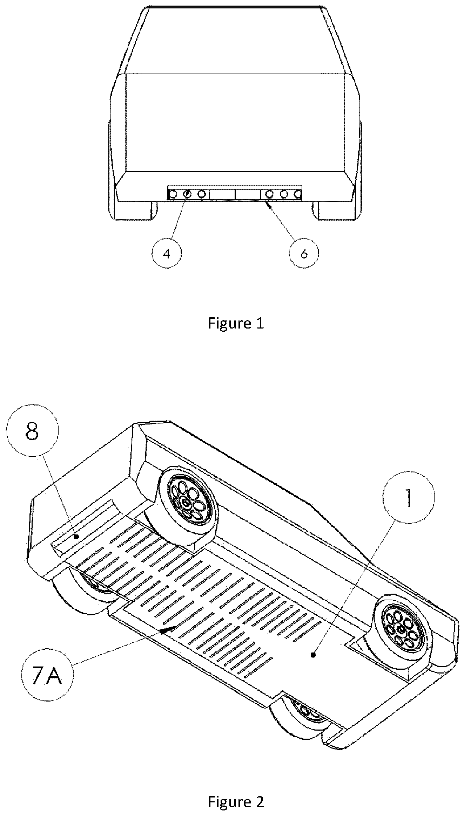

Figure 1 - Rear view of a family-type passenger car, showing the exhaust system consisting of the exhaust pipes (4) and its end part (6).
Figure 2 - ¾ rear and bottom view of a passenger car, showing the slots (7A) in the floor (1) of the vehicle and the exhaust outlet (8).

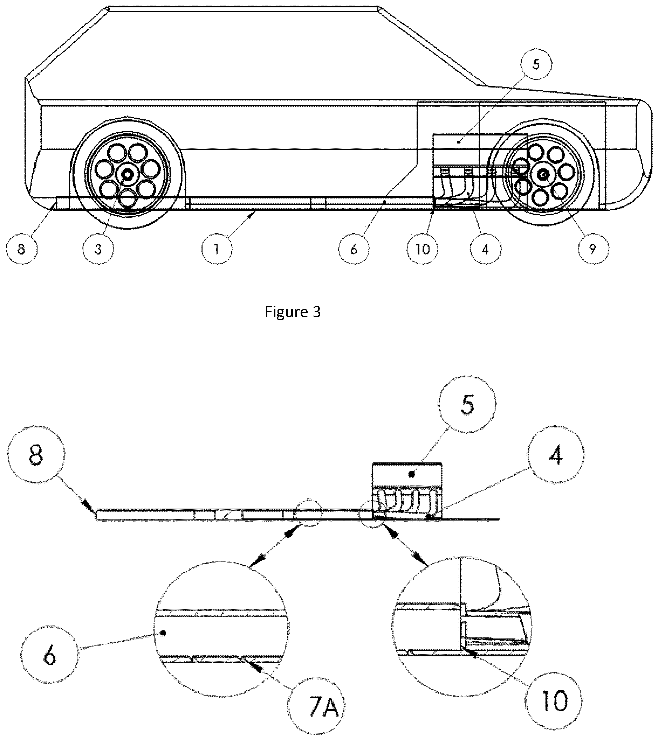

Figure 3 - Side view of a family-type passenger car, with identification of engine (5), front wheels (9), exhaust pipes (4) and their connection to the common final exhaust (10), common final exhaust (6), vehicle floor (1), rear wheels (3) and exhaust outlet (8).

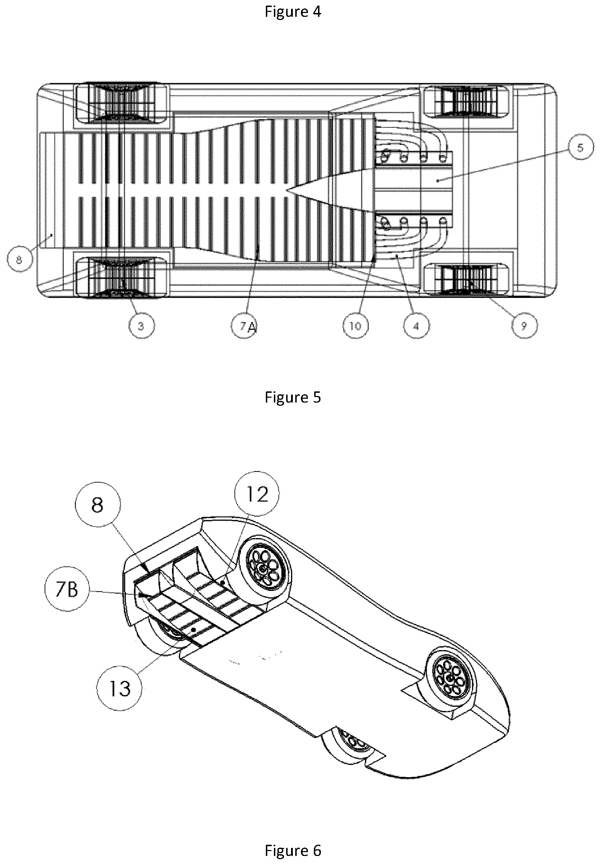

Figure 4 - Sectional side view of a family-type passenger car, with identification of the engine (5), the exhaust pipes (4), their connection to the common final exhaust (10), the vehicle floor (1) showing the communication slots (7A) for outside air suction to the exhaust duct, the common final exhaust (6) and the exhaust outlet (8).
Figure 5 - Representation of the bottom view of a family-type passenger car, with identification of the engine (5), the front wheels (9), the exhaust pipes (4), their connection to the common final exhaust (10), the transversal slots (7A) on the vehicle floor (1), the rear wheels (3) and the exhaust outlet (8).
Figure 6 - Representation of the ¾ rear and bottom view of a sports-type car, showing the slots (7B) in the diffuser, the lateral wall (12) and the upper wall (13) of the diffuser, and the exhaust outlet (8).

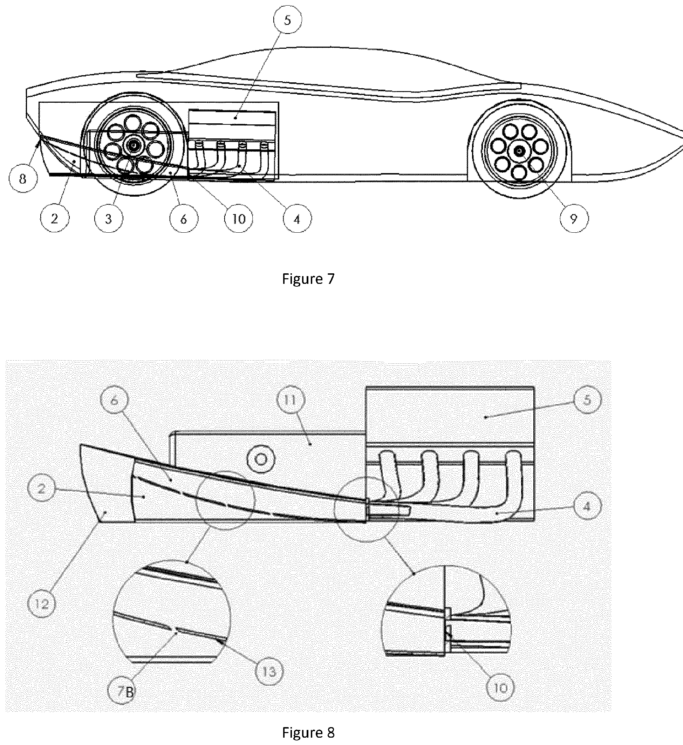

Figure 7 - Side view representation of a sports car, with identification of the engine (5), the front wheels (9), the exhaust pipes (4), and their connection to the common final exhaust (10), the common final exhaust (6), the rear wheels (3), the diffuser (2) and the exhaust outlet (8).
Figure 8 - Sectional side view representation of the engine/gearbox/exhaust/diffuser assembly, of a sports car, with identification of the engine (5), the exhaust pipes (4), their connection to the common final exhaust (10), the upper wall (13) of the diffuser (2), the transverse slots (7B) of the lateral wall (12) of the diffuser (2), its interior, the common final exhaust (6) and the gearbox (11).

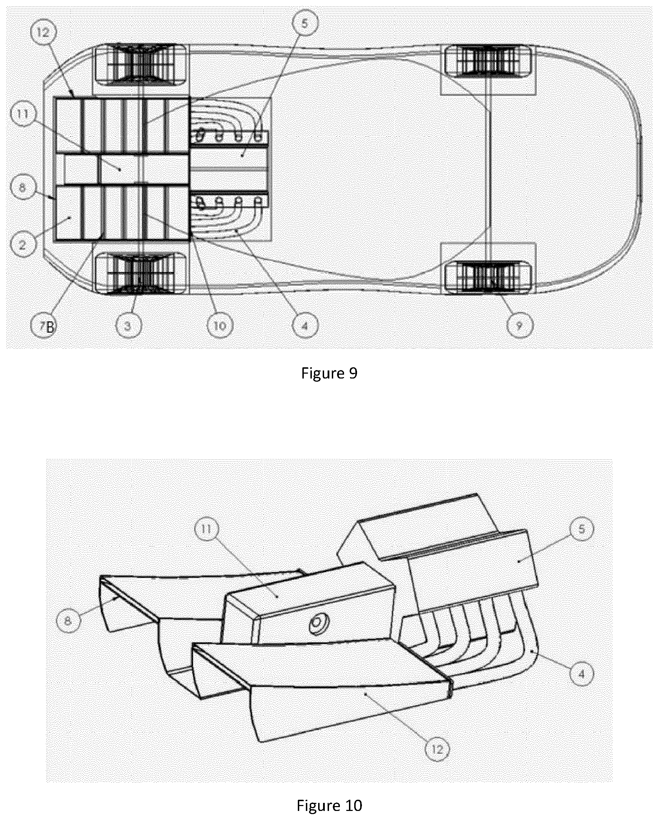

Figure 9 - Representation of the bottom view of a sports car, with identification of the engine (5), the front wheels (9), the exhaust pipes (4), their connection to the common final exhaust (10), the rear wheels (3), the transverse slots (7B) in the upper wall (13) of the diffuser (2), the exhaust outlet (8), the gearbox (11) and the lateral wall (12) of the diffuser (2).
Figure 10 - Representation of the ¾ rear and top view of the engine/gearbox/exhaust/diffuser assembly, of a sports type car, showing the engine (5) and exhaust pipes (4), the gearbox (11), the lateral wall (12) of the diffuser (2) and the exhaust outlet (8).

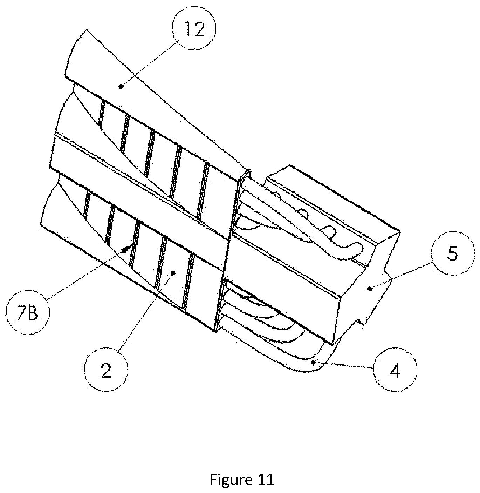

Figure 11 - Representation of the ¾ front and bottom view of the engine/gearbox/exhaust/diffuser assembly of a sports car, showing the slots (7B) in the diffuser (2), the engine (5), the exhaust pipes (4) and the lateral wall (12) of the diffuser (2).

### DETAILED DESCRIPTION OF THE INVENTION

The present invention relates to an improved vehicle providing recovery of exhaust gases for vehicles, resorting to using the kinetic energy of the exhaust gases of the respective internal combustion engine, which is usually wasted, and thereby increasing the aerodynamic efficiency of such vehicle.

For this use of the kinetic energy of the exhaust gases of an internal combustion engine to be possible, it is essential that the improved system is materialised either:
- on the floor (1) of a vehicle, which may be extended to the diffuser (2), whenever and provided that the vehicle has this aerodynamic device, i.e. the diffuser (2); or
- only in the diffuser (2), and is applicable to any type of motor vehicle, for use on the road or in sports events, in the latter case, whenever its use is permitted by the applicable technical regulations.

Therefore, the improved vehicle providing exhaust gas recovery which is the object of this invention, comprises:
- the floor (1) of a vehicle, whether or not equipped with a diffuser (2), projected onto the floor at the level of and behind the rear wheels (3);
- exhaust pipes (4) of the gases emitted by at least one internal combustion engine (5). These exhaust pipes (4) must have a development enabling them to be laid side-by-side, i.e. parallel to each other, after leaving the internal combustion engine (5) and after passing through the silencer and catalytic converter (not shown in the figures for the sake of simplicity), on the inner side of the chassis, on the floor (1) of the vehicle and/or on the diffuser (2). The entire end part (6) of the exhaust pipes (4) will have a cross-section of an approximately rectangular shape, with its lower wall developing at maximum width, on the vehicle floor (1) and at the level of the diffuser (2), whenever the vehicle is equipped with this aerodynamic device, i.e. the diffuser (2), on which it will be placed.

In order for the system object of the present invention to function, it is essential that there is communication between the space outside the vehicle, below the floor (1) of the said vehicle or inside the diffuser (2), and the interior of the final section of the exhaust pipes (6).

The passage of the air circulating under the vehicle, drawn into the interior of the exhaust end section (6), is ensured by opening small circular holes or narrow transverse slots (7A)(7B) in the lower wall of the floor (1) or in the upper wall (13) of the diffuser (2), respectively, extending through the lower wall of the exhaust end section (6).

Where slots (7A)(7B) are opened, they shall be designed, or opened, so as to have, according to the longitudinal axis of the vehicle, a development from bottom to top and from front to rear, obliquely angled between 45° and 60°, open upwards and rearwards, with the vertical axis of the vehicle. The front edges of the slots (7A)(7B), on the underside, on the floor (1) or on the diffuser (2), as well as their rear edges on the top side, on the exhaust, shall be chamfered so as to ensure a smooth transition with the contiguous walls. The opposite edges of the slots (7A)(7B) should be edged with the same development angle of the slots (7A)(7B). This configuration is intended not only to permit the smoothest and most effective flow of the air drawn in from the outside towards the exhaust, but also to limit the possible escape of exhaust gases through the slots (7A)(7B) to the outside.

With the engine running and the vehicle moving, the passage of the exhaust gases at high speeds in the exhaust end section (6) will induce suction of the air flowing outwards under the vehicle floor (1) or inside the diffuser (2) through orifices or slots (7A)(7B) creating a suction effect which will help reduce the static pressure of such air, limit or delay the transition from laminar to turbulent flow, and maintain its flow adhering to the outer surface of the floor (1) or inside the diffuser (2).

Exhaust gases from internal combustion engines are emitted at temperatures of around 600°C, and in the case of high performance engines, these temperatures can reach or exceed 900°C. It is therefore of the utmost importance for the proper functioning of the present invention, that the transmission of this thermal energy to the vehicle components in its physical proximity be better limited. Thus, the present invention, in a preferred embodiment, presents an adequate thermal insulation, in order to avoid its overheating, with consequent irreversible structural damage of the device and of the remaining structures around it. This thermal insulation is preferably achieved by fully lining the exhaust end sections (6) with ceramic materials such as zirconium oxide mixtures. This or other thermal insulation is of major importance in the most critical and highest risk region, which corresponds to the contact surface between the end sections of the exhausts (6) and the upper surface of the floor (1) of the vehicle or the upper wall (13) of the diffuser (2), on which that section of the exhausts (6) is placed.

## Claims

1. An improved vehicle providing exhaust gas recovery, the vehicle comprising a floor (1) and no diffuser (2),
a. comprising at least one internal combustion engine (5), a muffler, a catalytic converter, and exhaust pipes (4) of the gases emitted by said at least one internal combustion engine (5), these exhaust pipes (4) being arranged such that, after leaving the internal combustion engine (5) are arranged parallel to each other and after passing through the muffler and catalytic converter, on the inner side of the chassis, on the floor (1) of the vehicle;
b. wherein an entire end part (6) of the exhaust pipes (4) has an approximately rectangular cross-section, with its lower wall extending as wide as possible over the floor (1); and
c. comprising circular holes (7A) in the lower wall of the floor (1), such holes extending through the lower wall of the exhaust pipes' (4) end part (6), such that there is communication between a space outside the vehicle, below the floor (1) of the vehicle, and the interior of the exhaust pipes' end part (6), thereby providing that the air flowing under the vehicle is drawn into the interior of the exhaust end section (6).

2. An improved vehicle providing exhaust gas recovery, the vehicle comprising a floor (1) and a diffuser (2),
a. comprising at least one internal combustion engine (5), a muffler, a catalytic converter, and exhaust pipes (4) of the gases emitted by said at least one internal combustion engine (5), these exhaust pipes (4) being arranged such that, after leaving the internal combustion engine (5) are arranged parallel to each other and after passing through the muffler and catalytic converter, on the inner side of the chassis, on the diffuser (2);
b. wherein an entire end part (6) of the exhaust pipes (4) has an approximately rectangular cross-section, with its lower wall extending as wide as possible at the level of the diffuser (2); and
c. comprising transverse slots (7B) in the upper wall (13) of the diffuser (2), such slots extending through the lower wall of the exhaust pipes' (4) end part (6), such that there is communication between a space outside the vehicle, below the upper wall (13) of the diffuser (2) of the vehicle, and the interior of the exhaust pipes' end part (6), thereby providing that the air flowing under the vehicle is drawn into the interior of the exhaust end section (6).

3. A vehicle according to the previous claim wherein the transverse slots (7B) are opened, along the longitudinal axis of the vehicle, from bottom to top and from front to rear of the vehicle, obliquely, preferably with an angle between 45° and 60°, open upwards and rearwards, with the vertical axis of the vehicle.

4. A vehicle according to the previous claim wherein the front edges of the slots (7B) on the lower side, on the diffuser (2), as well as their rear edges on the upper side, on the end part of the exhausts (6) are chamfered and the opposite edges of the slots (7B) are edged, with the same angle of development of the slots (7B).

5. A vehicle according to any of the preceding claims wherein it presents a thermal insulation.

6. A vehicle according to the previous claim wherein the thermal insulation is a complete coating of the contact surfaces between the end section of the exhausts (6) and the upper surface of the floor (1) of the vehicle or the upper wall (13) of the diffuser (2) on which said section of the exhausts (6) is placed.

7. A vehicle according to the previous claim wherein the insulation of the end sections of the exhausts (6) is of ceramic materials with, for example, the use of mixtures with zirconium oxide.

8. A vehicle according to claim 2 wherein the diffuser (2) is projected on the floor (1) at the level of and behind the rear wheels (3).

## Patentansprüche

1. Verbessertes Fahrzeug mit Abgasrückgewinnung, wobei das Fahrzeug einen Boden (1) und keinen Diffusor (2) aufweist, umfassend
a. Es umfasst mindestens einen Verbrennungsmotor (5), einen Schalldämpfer, einen Katalysator und Auspuffrohre (4) für die von dem mindestens einen Verbrennungsmotor (5) ausgestoßenen Gase, wobei diese Auspuffrohre (4) so angeordnet sind, dass sie nach dem Verlassen des Verbrennungsmotors (5) parallel zueinander und nach dem Passieren des Schalldämpfers und des Katalysators an der Innenseite des Fahrgestells auf dem Boden (1) des Fahrzeugs angeordnet sind;
b. wobei ein ganzer Endteil (6) der Auspuffrohre (4) einen annähernd rechteckigen Querschnitt aufweist, wobei seine untere Wand sich so weit wie möglich über den Boden (1) erstreckt;
und
c. mit kreisförmigen Löchern (7A) in der unteren Wand des Bodens (1), wobei sich diese Löcher durch die untere Wand des Endteils (6) der Auspuffrohre (4) erstrecken, so dass eine Verbindung zwischen einem Raum außerhalb des Fahrzeugs, unterhalb des Bodens (1) des Fahrzeugs, und dem Inneren des Endteils (6) der Auspuffrohre besteht, wodurch dafür gesorgt wird, dass die unter dem Fahrzeug strömende Luft in das Innere des Auspuffendteils (6) gesaugt wird.

2. Verbessertes Fahrzeug mit Abgasrückgewinnung, wobei das Fahrzeug einen Boden (1) und einen Diffusor (2) aufweist,
a. mit mindestens einem Verbrennungsmotor (5), einem Schalldämpfer, einem Katalysator und Auspuffrohren (4) für die von dem mindestens einen Verbrennungsmotor (5) ausgestoßenen Gase, wobei diese Auspuffrohre (4) so angeordnet sind, dass sie nach dem Verlassen des Verbrennungsmotors (5) parallel zueinander und nach dem Passieren des Schalldämpfers und des Katalysators an der Innenseite des Fahrgestells auf dem Diffusor (2) angeordnet sind;
b. wobei ein ganzer Endteil (6) der Auspuffrohre (4) einen annähernd rechteckigen Querschnitt aufweist, wobei sich seine untere Wand auf Höhe des Diffusors (2) so weit wie möglich erstreckt;
und
c. mit Querschlitzen (7B) in der oberen Wand (13) des Diffusors (2), wobei sich diese Schlitze durch die untere Wand des Endteils (6) der Auspuffrohre (4) erstrecken, so dass eine Verbindung zwischen einem Raum außerhalb des Fahrzeugs, unterhalb der oberen Wand (13) des Diffusors (2) des Fahrzeugs, und dem Inneren des Endteils (6) der Auspuffrohre besteht, wodurch dafür gesorgt wird, dass die unter dem Fahrzeug strömende Luft in das Innere des Auspuffendteils (6) gesaugt wird.

3. Fahrzeug nach dem vorhergehenden Anspruch, wobei die Querschlitze (7B) entlang der Fahrzeuglängsachse von unten nach oben und von vorne nach hinten schräg geöffnet sind, vorzugsweise mit einem Winkel zwischen 45° und 60°, und sich nach oben und hinten mit der vertikalen Achse des Fahrzeugs öffnen.

4. Fahrzeug nach dem vorhergehenden Anspruch, wobei die Vorderkanten der Schlitze (7B) auf der Unterseite, am Diffusor (2), sowie deren Hinterkanten auf der Oberseite, am Endteil der Auspuffrohre (6), abgeschrägt sind und die gegenüberliegenden Kanten der Schlitze (7B) mit dem gleichen Entwicklungswinkel der Schlitze (7B) gekantet sind.

5. Fahrzeug nach einem der vorhergehenden Ansprüche, wobei es eine Wärmeisolierung aufweist.

6. Fahrzeug nach dem vorhergehenden Anspruch, wobei die Wärmeisolierung eine vollständige Beschichtung der Kontaktflächen zwischen dem Endabschnitt der Auspuffrohre (6) und der oberen Fläche des Bodens (1) des Fahrzeugs oder der oberen Wand (13) des Diffusors (2) ist, auf dem der Abschnitt der Auspuffrohre (6) angeordnet ist.

7. Fahrzeug nach dem vorhergehenden Anspruch, wobei die Isolierung der Endabschnitte der Auspuffrohre (6) aus keramischen Werkstoffen besteht, z. B. unter Verwendung von Mischungen mit Zirkonoxid.

8. Fahrzeug nach Anspruch 2, wobei der Diffusor (2) auf den Boden (1) in Höhe und hinter den Hinterrädern (3) projiziert ist.

## Revendications

1. Véhicule amélioré permettant la récupération des gaz d'échappement, le véhicule comprenant un plancher (1) et aucun diffuseur (2), comprenant
a. il comprend au moins un moteur à combustion interne (5), un silencieux, un convertisseur catalytique et des tuyaux d'échappement (4) des gaz émis par ledit au moins un moteur à combustion interne (5), ces tuyaux d'échappement (4) étant disposés de telle sorte que, après leur sortie du moteur à combustion interne (5), ils sont disposés parallèlement les uns aux autres et après avoir traversé le silencieux et le convertisseur catalytique, sur la face intérieure du châssis, sur le plancher (1) du véhicule ;
b. dans lequel toute une partie terminale (6) des tuyaux d'échappement (4) a une section transversale approximativement rectangulaire, avec sa paroi inférieure s'étendant aussi largement que possible sur le plancher (1) ;
et
c. comprenant des trous circulaires (7A) dans la paroi inférieure du plancher (1), ces trous s'étendant à travers la paroi inférieure de la partie terminale (6) des tuyaux d'échappement (4), de sorte qu'il y ait une communication entre un espace extérieur au véhicule, sous le plancher (1) du véhicule, et l'intérieur de la partie terminale (6) des tuyaux d'échappement, permettant ainsi à l'air circulant sous le véhicule d'être aspiré vers l'intérieur de la section terminale (6) de l'échappement.

2. Véhicule amélioré permettant la récupération des gaz d'échappement, le véhicule comprenant un plancher (1) et un diffuseur (2),
a. comprenant au moins un moteur à combustion interne (5), un silencieux, un convertisseur catalytique et des tuyaux d'échappement (4) des gaz émis par ledit au moins un moteur à combustion interne (5), ces tuyaux d'échappement (4) étant disposés de telle sorte que, après leur sortie du moteur à combustion interne (5), ils sont disposés parallèlement les uns aux autres et après avoir traversé le silencieux et le convertisseur catalytique, sur la face intérieure du châssis, sur le diffuseur (2) ;
b. dans lequel toute une partie terminale (6) des tuyaux d'échappement (4) a une section transversale approximativement rectangulaire, avec sa paroi inférieure s'étendant aussi largement que possible au niveau du diffuseur (2) ; et
c. comprenant des fentes transversales (7B) dans la paroi supérieure (13) du diffuseur (2), ces fentes s'étendant à travers la paroi inférieure de la partie terminale (6) des tuyaux d'échappement (4), de sorte qu'il y ait une communication entre un espace extérieur au véhicule, sous la paroi supérieure (13) du diffuseur (2) du véhicule, et l'intérieur de la partie terminale (6) des tuyaux d'échappement, permettant ainsi à l'air circulant sous le véhicule d'être aspiré vers l'intérieur de la section terminale (6) de l'échappement.

3. Véhicule selon la revendication précédente, dans lequel les fentes transversales (7B) sont ouvertes, le long de l'axe longitudinal du véhicule, de bas en haut et de l'avant à l'arrière du véhicule, obliquement, de préférence avec un angle compris entre 45° et 60°, ouvertes vers le haut et vers l'arrière, par rapport à l'axe vertical du véhicule.

4. Véhicule selon la revendication précédente, dans lequel les bords avant des fentes (7B) sur le côté inférieur, dans le diffuseur (2), ainsi que leurs bords arrière sur le côté supérieur, dans la partie terminale des échappements (6) sont chanfreinés et les bords opposés des fentes (7B) sont biseautés, avec le même angle de développement des fentes (7B).

5. Véhicule selon l'une quelconque des revendications précédentes, lequel présente une isolation thermique.

6. Véhicule selon la revendication précédente, dans lequel l'isolation thermique est un revêtement complet des surfaces de contact entre la section terminale des échappements (6) et la surface supérieure du plancher (1) du véhicule ou la paroi supérieure (13) du diffuseur (2) où ladite section des échappements (6) est placée.

7. Véhicule selon la revendication précédente, dans lequel l'isolation des sections terminales des échappements (6) est en matériaux céramiques avec, par exemple, l'utilisation de mélanges avec de l'oxyde de zirconium.

8. Véhicule selon la revendication 2, dans lequel le diffuseur (2) est projeté du plancher (1) au niveau des et derrière les roues arrière (3).
